Europäisches Patentamt

European Patent Office

Office européen des brevets

(11) Veröffentlichungsnummer: **0 256 221**
B1

# EUROPÄISCHE PATENTSCHRIFT

(45) Veröffentlichungstag der Patentschrift:
21.03.90

(51) Int. Cl.⁴: **F16J 15/32,** F16J 15/56,
F16J 15/16

(21) Anmeldenummer: 87107043.9

(22) Anmeldetag: 15.05.87

(54) **Anordnung zur Abdichtung einer Stange.**

(30) Priorität: 19.06.86 DE 3620539

(43) Veröffentlichungstag der Anmeldung:
24.02.88 Patentblatt 88/8

(45) Bekanntmachung des Hinweises auf die Patenterteilung:
21.03.90 Patentblatt 90/12

(84) Benannte Vertragsstaaten:
CH DE ES FR GB IT LI

(56) Entgegenhaltungen:
EP-A- 0 104 504
DE-A- 3 418 898

(73) Patentinhaber: Busak + Luyken GmbH & Co.,
Handwerkstrasse 5-7, D-7000 Stuttgart 80(DE)

(72) Erfinder: Müller, Heinz K., Prof.Dr.-Ing., Aprikosenweg 2,
D-7050 Waiblingen(DE)

(74) Vertreter: Patentanwälte Kohler - Schwindling - Späth,
Hohentwielstrasse 41, D-7000 Stuttgart 1(DE)

ACTORUM AG

## Beschreibung

Die Erfindung betrifft eine Anordnung zur Abdichtung der Stelle, an der die axial bewegliche Stange eines hydraulischen Gerätes dessen Gehäusewand durchdringt, mit einem Dichtring aus einem zähelastischen Kunststoff oder einem Elastomer-Werkstoff mit einer Außenfläche und einer Innenfläche und einem Spannring aus einem Elastomer-Werkstoff, der weicher als der Werkstoff des Dichtrings ist, welche Ringe gemeinsam in einer Nut der Gehäusewand derart angeordnet sind, daß die gemeinsame Berührungsfläche der beiden Ringe ein dem abzudichtenden Raum zugewandtes Ende aufweist, und von denen der Spannring mit einer durch Übermaß hervorgerufen, radialen Vorspannung zwischen die Umfangsfläche der Nut und die Außenfläche des Dichtringes dichtend eingespannt ist und der Dichtring an seiner der Stange zugewandten Innenfläche zwei axial zueinander versetzte, ringförmige Dichtkanten aufweist, mit denen er die Stange dichtend berührt.

Eine solche Dichtungsanordnung mit einem sogenannten "Doppelkantenring" dient zu einer vereinfachten Verwirklichung des Tandemprinzips, das von zwei axial hintereinander angeordneten Dichtungsanordnungen Gebrauch macht, deren Dichtringe jeweils nur eine Dichtkante aufweisen.

Ein derartiger Doppelkantenring ist durch die DE-A 3 418 898 bekanntgeworden.

Weiterhin ist das Tandemprinzip beispielsweise in H.K. Müller: "Tandem-Stangendichtungen in der Hydrauliktechnik", VIII. internationale Dichtungstagung, Dresden 1986 (KdT) beschrieben. Der Vorteil einer Dichtungsanordnung mit einem Doppelkantenring gegenüber einer Tandemanordnung besteht in dem geringeren Bedarf an Bauraum und in den geringeren Herstellungs- und Montagekosten.

Ähnlich wie bei einer Tandemanordnung wird auch bei einem Doppelkantenring während des Ausfahrens der Stange aus dem flüssigkeitsgefüllten Raum infolge der von der bewegten Stange erzeugten Schleppströmung die diesem Raum zugewandte Dichtkante geringfügig angehoben. Dabei bildet sich zwischen dieser Dichtkante und der Stangenoberfläche ein Spalt. Im Ringraum des Doppelkantenrings sammelt sich Flüssigkeit an, weil die durch den Spalt hindurchgeschleppte Flüssigkeitsschicht von der zweiten Dichtkante abgestreift wird. Die derartig bewirkte Speicherung von Flüssigkeit im Ringraum zwischen den beiden Dichtkanten ist an sich erwünscht, denn sie ermöglicht bei einer an sich bekannten, günstigen Gestaltung der an die Dichtkanten anschließenden Flächen im Prinzip ein unmittelbares Zurückschleppen gespeicherter Flüssigkeit in den flüssigkeitsgefüllten Raum, wenn die Stange wieder in diesen einfährt. Ein besonders dicker, die Ditchkante abhebender Schmierfilm entsteht beim Ausfahren der Stange aus einem ölgefüllten Raum besonders dann, wenn das Öl sehr kalt und darum extrem zähflüssig ist. Auch aus diesem Grund ist es vorteilhaft, mindestens zwei Dichtkanten hintereinander zu schalten. Die von der ersten Dichtkante im Schmierfilm erzeugte Flüssigkeitsreibung erwärmt das kalte Öl und die Abstreifwirkung der zweiten Dichtkante wird verbessert. Trotzdem ist die Wirkung von Dichtungsanordnungen mit Doppelkantenringen nicht so günstig, wie es die vorstehenden Betrachtungen erwarten lassen. Dies liegt daran, daß bei einem Doppelkantenring der von den beiden Kanten begrenzte Ringraum nur ein relativ kleines Volumen hat, so daß unter ungünstigen Betriebsbedingungen der Ringraum nach verhältnismäßig kurzer Zeit völlig mit der eingeschleppten Flüssigkeit angefüllt sein kann. Wird sodann weiter Flüssigkeit in den Ringraum hineingeschleppt, so bildet sich im Ringraum zwischen den Dichtkanten unmittelbar ein Zwischendruck Pz, der wesentlich größer werden kann als der Druck P der abzudichtenden Flüssigkeit. Ursache dafür ist einerseits die dichtende Abstreifwirkung der äußeren, niederdruckseitigen Dichtkante und andererseits der hohe Strömungswiderstand des Spaltes zwischen der bewegten Stange und der inneren Dichtkante, durch den, falls das System dicht bleiben soll, der eingeschleppte Flüssigkeitsstrom entgegen der Schlepprichtung wieder in den abzudichtenden Raum zurückströmen müßte. Ein auf diese Weise entstehender hoher Zwischendruck bewirkt nun in unerwünschter Weise eine hydraulische Entlastung und somit eine Verminderung der Anpressung der Dichtkanten an die Stange. Dabei kann die äußere Dichtkante drastisch entlastet werden, mit der Folge, daß auch die Dicke des unter der äußeren Dichtkante hindurch in den drucklosen Umgebungsraum geschleppten Flüssigkeitsfilms drastisch zunimmt. Da aber andererseits während des Zurückfahrens der Stange in den abzudichtenden Raum der Ringraum zwischen den Dichtkanten wieder zum Teil durch Schleppwirkung leergepumpt wird, ist während dieser Bewegungsphase der Zwischendruck klein und die äußere Dichtkante steht wieder unter hoher Anpressung. Infolgedessen wird der außerhalb der Dichtung auf der Stangenoberfläche haftende, dicke Flüssigkeitsfilm von der äußeren Dichtkante abgestreift und es entsteht Leckage.

Demgemäß liegt der Erfindung die Aufgabe zugrunde, eine Dichtungsanordnung der eingangs genannten Art mit einem Doppelkantenring so zu verbessern, daß die Gefahr des Abhebens der äußeren Dichtkante und damit der Leckage wegen des geringen Speichervermögens des von den beiden Dichtkanten begrenzten Ringraumes vermieden wird.

Diese Aufgabe wird nach der Erfindung dadurch gelöst, daß der Dichtring mindestens einen den sich zwischen den Dichtkanten befindenden Ringraum mit seiner Außenfläche verbindenden Kanal aufweist und jede von der Einmündung eines Kanals in die Außenfläche gebildete Öffnung von dem Spannring bedeckt und zwischen dem hochdruckseitigen Ende und der Mitte der gemeinsamen Berührungsfläche von Dichtring und Spannring angeordnet ist.

Der nach der Erfindung den Ringraum mit der Außenfläche des Dichtungsringes verbindende und an seiner Mündung durch den Spannring abgedeckte Kanal wirkt nach Art eines Überdruckventils. Sobald der Zwischendruck Pz im Ringraum und damit auch an der Mündung des Kanals die Flächenpressung, mit der der Spannring auf der Mündung des Kanals aufliegt, überschreitet, hebt der Spannring von dieser Öffnung ab und die unter der inneren Dichtkante in den Zwischenraum geschleppte Flüssigkeit kann über den Kanal und den Spalt zwischen dem angehobenen Spannring und der Außenfläche des Dichtringes hindurch wieder in den abzudichtenden Raum zurückfließen. Die erfindungsgemäße Dichtungsanordnung gibt dem Konstrukteur die Möglichkeit, die Differenz zwischen dem Zwischendruck und dem Druck der abzudichtenden Flüssigkeit auf einen solchen Wert einzustellen, daß unter allen Betriebsbedingungen eine genügend hohe Anpressung und damit die Dichtwirkung der äußeren Dichtkante des Doppelkantenringes erhalten bleibt. Die Wahl der Stelle, an der der Kanal in die Außenfläche des Dichtringes mündet gestattet es, die Flächenpressung zu bestimmen, mit der der Spannring am Dichtring anliegt und damit auch die Einmündung des Kanales abdeckt. Es kann daher die Einmündung des Kanales an eine solche Stelle gelegt werden, an welcher die Flächenpressung nur wenig größer ist als der abzudichtende Druck. Allerdings ist immer gewährleistet, daß die Flächenpressung größer ist als dieser Druck, weil sich stets der auf den Spannring wirkende, abzudichtende Druck und die Eigenspannung des Spannringes addieren.

Es versteht sich, daß der Dichtring vorzugsweise mit mehreren auf seinen Umfang verteilten Kanälen versehen wird, so daß der Strömungswiderstand gegenüber der rückströmenden Flüssigkeit gering ist, was wiederum dazu beiträgt, daß die Differenz zwischen dem im Ringraum herrschenden Zwischendruck und dem Druck der abzudichtenden Flüssigkeit klein gehalten werden kann.

Bei einer bevorzugten Ausführungsform der Erfindung ist die Außenfläche der Dichtungen mit einer Ringnut versehen, in die die Kanäle einmünden und die auf ihrer ganzen Länge von dem Spannring bedeckt ist. Auch diese Ringnut kann wieder vorteilhaft nahe dem dem abzudichtenden Raum zugewandten Ende der Berührungsfläche zwischen Dichtring und Spannring angeordnet sein, um die Druckdifferenz zwischen dem Zwischendruck und dem abzudichtenden Druck wirklich klein zu halten. Der Vorteil dieser Ausführungsform der Erfindung besteht darin, daß die durch die einzelnen Kanäle zurückströmende Flüssigkeit sich zunächst in der Ringnut sammelt, bevor sie bei druckbedingtem Abheben des Spannringes in den abzudichtenden Raum zurückfließt.

Bei einer bevorzugten Ausführungsform der Erfindung besteht der Dichtring aus zwei Teilringen, von denen jeder eine Dichtkante aufweist, und es wird der Kanal von einer Nut gebildet, die in diejenige Stirnwand eines der beiden Teilringe eingearbeitet ist, mit der dieser Teilring an dem anderen Teilring anliegt. Bei dieser Ausführungform der Erfindung werden die Teilringe von dem abzudichtenden Medium axial aneinander angepreßt, sie berühren sich an ebenen oder kegelförmigen Stirnflächen, die zusammen die Teilfuge der beiden Teilringe bilden und die die Kanäle bildenden Nuten aufweisen. Der Vorteil dieser Ausführungsform der Erfindung besteht in der vereinfachten Herstellung der radialen Kanäle und einer besseren Möglichkeit, die beiden Teilringe separat optimal zu dimensionieren.

Die Erfindung kann nicht nur bei Dichtungsanordnungen Anwendung finden, bei denen der Dichtring als Anlagefläche für den Spannring eine Zylinderfläche aufweist, sondern auch bei solchen Dichtungsanordnungen, bei denen der Dichtring eine profilierte Außenfläche aufweist, die dazu dienen kann, den Druck des Spannringes auf den Dichtring in vorgegebener Weise zu verteilen. Die Erfindung ist selbst bei solchen Dichtungsanordnungen anwendbar, bei denen der Dichtring einen zwischen dem Spannring und der Umfangsfläche der Nut angeordneten Abschnitt aufweist, der zusammen mit dem die Dichtkanten aufweisenden Abschnitt eine den Spannring aufnehmende, zur Hochdruckseite hin offene Nut bildet. In diesem Fall stützt sich also der Spannring nicht unmittelbar, sondern über einen entsprechenden Abschnitt des Dichtringes an der Umfangsfläche der Nut ab. Die grundsätzliche Wirkungsweise der Dichtungsanordnung bleibt dabei unverändert. Es wird jedoch der erfindungsgemäßen Dichtung ein zusätzlicher Anwendungsbereich eröffnet, nämlich der Bereich der sogenannten Nutringe; die einen "eingeknöpften" O-Ring aufweisen. Auch hier können die von dem elastomeren O-Ring abgedeckten Kanäle zu einer deutlichen Verbesserung der Dichtungswirkung führen.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen:

Fig. 1 In schmatischer Darstellung einen Querschnitt durch eine nach der Erfindung ausgebildete Dichtungsanordnung, mit einem Diagramm des Druckverlaufs an der dargestellten Dichtung und

Fig. 2 bis 4 Querschnitte ähnlich Fig. 1 durch weitere Dichtungsanordnungen nach der Erfindung.

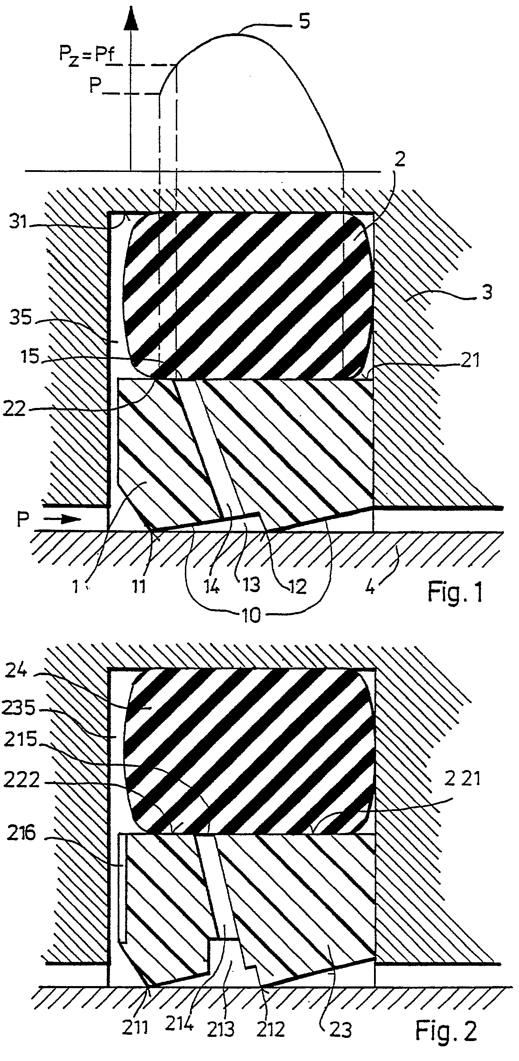

Die in Figur 1 dargestellte Dichtungsanordnung umfaßt einen Dichtring 1 und einen Spannring 2, die beide koaxial zueinander in die Nut 35 einer Gehäusewand 3 derart eingebaut sind, daß der Dichtring 1 mit den an seiner Innenfläche 10 vorhandenen Dichtkanten 11, 12 an der Umfangsfläche einer die Gehäusewand 3 durchdringenden Stange 4 anliegt, während sich der Spannring 2 zwischen der Umfangsfläche 31 der Nut 35 und der Außenfläche 21 des Dichtringes 1 befindet. Der Dichtring 1 und der Spannring 2 werden von der sich in Figur 1 links von der Dichtungsanordnung befindenden, unter einem Druck P stehenden Flüssigkeit belastet und nach rechts gegen die Flanke der Nut 35 gepresst. Während der Ausfahrbewegung der Stange 4 bildet sich an der hochdruckseitigen Dichtkante 11 ein hydrodynamischer Spalt, durch den infolge einer Schleppströmung Flüssigkeit in den Ringraum 13 zwischen den beiden Dichtkanten 11, 12 gelangt. Infolge der Abstreifwirkung der niederdruckseitigen Dichtkante 12 füllt sich der Ringraum 13 sowie auch ein diesen Ringraum 13 mit der Außenfläche 21 des Dichtringes 1 verbindender Kanal 14 mit Flüssigkeit. Bei weiterem Einschleppen von Flüssigkeit gelangen der Ringraum 13 und der Kanal 14 unter einen Zwischendruck Pz. Der Spannring 2 liegt infolge Übermaß und zusätzlich unter der Einwirkung des abzudichtenden Druckes P an der gesamten Außenfläche 21 des Dichtringes 1 mit einem von der Form, vom Elastizitätsmodul und vom Übermaß des Spannringes 2 abhängigen Verlauf der Flächenpressung an. Dieser Verlauf der Flächenpressung ist in dem zur Figur 1 gehörenden Diagramm durch die Kurve 5 veranschaulicht. Die Mündung 15 des Kanals 14 ist zunächst vom Spannring 2 dicht verschlossen. Sobald jedoch der Zwischendruck Pz im Ringraum 13 und im Kanal 14 den Wert der Flächenpressung Pf des Spannringes 2 an der Mündung 15 des Kanals 14 überschreitet, hebt die Flüssigkeit im Kanal 14 den Spannring 2 örtlich an und fließt sodann zur Hochdruckseite in den unter dem Druck P stehenden flüssigkeitsgefüllten Raum der Nut 35 zurück. Die Anordnung funktioniert daher nach Art eines Überdruckventils. Der in Figur 1 beispielsweise durch die Kurve 5 wiedergegebene Verlauf der Flächenpressung zwischen dem Spannring 2 und dem Dichtring 1 entspricht etwa den Verhältnissen, die sich bei der Verwendung eines O-Ringes als Spannring 2 einstellen. Das durch die Kurve 5 wiedergegebene Maximum der Flächenpressung liegt dabei etwa in der Mitte der Berührungsfläche zwischen dem Spannring 2 und dem Dichtring 1. Mit der erfindungsgemäßen Anordnung der Mündung 15 des Kanals 14 zwischen dieser Mitte und dem hochdruckseitigen Ende 22 der Berührungsfläche wird erreicht, daß die Flächenpressung Pf an der Mündung 15 nur geringfügig höher ist als der Druck P der abzudichtenden Flüssigkeit. Somit ist erreicht, daß der maximale Zwischendruck Pz unter allen Betriebsbedingungen nur geringfügig größer werden kann als der abzudichtende Druck.

Figur 2 zeigt eine Dichtunganordnung mit einem einteiligen Dichtring 23 und einem Spannring 24, die sich von der Ausführungsform nach Figur 1 nur dadurch unterscheiden, daß der Ringraum 213 zwischen der inneren Dichtkante 211 und der äußeren Dichtkante 212 eine nutartige Erweiterung aufweist und außerdem in die dem abzudichtenden Raum zugewandte Stirnfläche des Dichtringes 21 radiale Nuten 216 eingearbeitet sind, die in jedem Fall gewährleisten, daß der den Spannring 24 aufnehmende Abschnitt der Nut 235 für die abzudichtende, unter dem Druck P stehende Flüssigkeit zugänglich ist. Die Funktion dieser Dichtung ist die gleiche wie diejenige der Dichtung nach Figur 1.

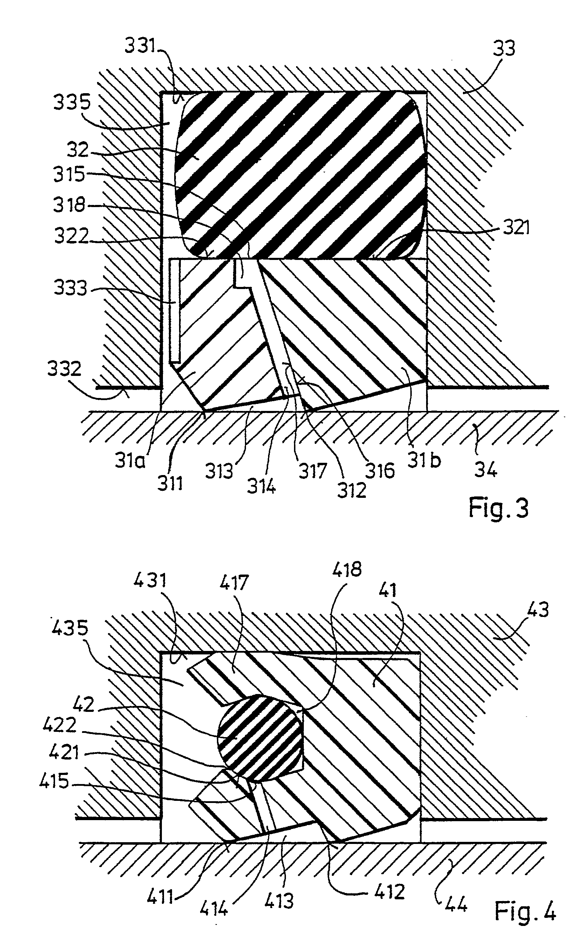

Figur 3 zeigt eine Ausführungsform der Dichtungsanordnung, dessen Dichtring aus zwei Teilringen 31a und 31b besteht. Diese beiden Teilringe 31a, 31b und der Spannring 32 sind wiederum gemeinsam in eine Nut 335 der Gehäusewand 33 eingebaut. Die abzudichtende Flüssigkeit dringt durch die Gehäusebohrung 332 in die Nut 335 ein. Der Teilring 31a weist eine Dichtkante 311 und eine kegelige Stirnfläche 316 auf, mit der der Teilring 31a an einer dazu konformen, kegeligen Stirnfläche 317 des anderen Teilringes 31b anliegt, der ebenfalls eine Dichtkante 312 aufweist. Zwischen den beiden Dichtkanten 311 und 312 befindet sich wieder ein Ringraum 313, von dem aus sich ein Kanal 314 bis zu einer an der Außenfläche 321 des Dichtringes angeordneten Ringnut 318 erstreckt, die von einem in die Stirnfläche 316 des ersten Teilringes 31a eingearbeiteten Absatz gebildet wird. Die Mündungen 315 der Kanäle 314 befinden sich im Bereich dieser Ringnut 318. Der Spannring 32 ist mit Übermaß in den Raum zwischen der äußeren Umfangsfläche 331 der Nut 335 und der Außenfläche 321 des von den Teilringen 31a und 31b gebildeten Dichtringes eingespannt. Die Ringnut 315 befindet sich zwischen dem am Teilring 31a befindlichen, hochdruckseitigen Ende 322 der gemeinsamen Berührungsfläche des Spannringes 32 mit den Teilringen 31a, 31b und der Mitte dieser Berührungsfläche angeordnet. In die dem abzudichtenden Raum zugewandte Sitrnfläche des Dichtringes sind wiederum radiale Nuten 333 eingearbeitet.

Bei der in Figur 4 dargestellten Ausführungsform ist der in eine Nut 435 der Gehäusewand 43 eingebaute Dichtring 41 nach Art eines Nutringes ausgebildet, der einen an der Umfangsfläche 431 der Nut 435 anliegenden Abschnitt 417 aufweist, der zusammen mit dem restlichen Teil des Dichtringes 41 eine zur Hochdruckseite hin offene Nut 418 begrenzt, in den ein als Spannring dienender O-Ring 42 eingeknöpft ist. Dieser gummielastische Spannring 42 ist wieder unter Vorspannung in die Nut 418 des Dichtringes 41 eingebaut, so daß er einerseits den Abschnitt 417 des Dichtringes an die Umfangsfläche 431 der Nut 435 dichtend anpreßt und außerdem auch den wiederum mit zwei axial hintereinander angeordneten Dichtkanten 411, 412 versehenen Dichtring 41 gegen die abzudichtende Welle 44 drückt. Demgemäß unterscheidet sich diese Ausführungsform der Dichtungsanordnung von den vorher beschriebenen Ausführungsformen im wesentlichen nur dadurch, daß sich der Spannring 42 nicht unmittelbar, sondern über einen nachgiebigen Abschnitt 417 des Dichtringes 41 an der Umfangsfläche 431 der Nut 435 abstützt.

Wie bei den vorhergehenden Ausführungsbeispielen ist auch hier wieder der Ringraum 413, der sich zwischen den beiden Dichtkanten 411 und 412 befindet, über einen Kanal 414 mit der Außenfläche 421 des von dem Spannring 42 belasteten Abschnittes des Dichtringes 41 verbunden, der die Mündungsöffnungen 415 dieser Kanäle abdeckt. Die Mündung dieser Kanäle ist wieder in einem Bereich der Berührungsfläche zwischen dem Spannring 42 und dem Dichtring 41 angeordnet, der sich zwischen der Mitte und dem hochdruckseitigen Ende 422 dieser Berührungsfläche befindet. Daher ist auch bei dieser Ausführungsform der Erfindung gewährleistet, daß in den Ringraum 413 eingeschleppte Flüssigkeit über die Kanäle 414 aus diesem Ringraum abfließen kann, wenn der Zwischendruck Pz in diesem Ringraum 413 die von dem Spannring 42 ausgeübte Flächenpressung Pf an den Mündungen der Kanäle 414 überschreitet. Auch kann hier durch die Lage der Mündungen 415 in bezug auf die gemeinsame Berührungsfläche erreicht werden, daß die Flächenpressung Pf und damit der sich einstellende Zwischendruck Pz nur wenig größer ist als der Druck P der abzusperrenden Flüssigkeit.

Die dargestellten Ausführungsbeispiele machen deutlich, daß die Erfindung bei Dichtungsanordnungen unterschiedlicher Art Anwendung finden kann und für den Fachmann viele Möglichkeiten bestehen, einen mittels eines Spannringes mit einer Art Rückschlagklappe versehenen Kanal immer dann anzuordnen, wenn es gilt, einen von Dichtungskanten begrenzten Raum, in dem sich die abzudichtende Flüssigkeit unter Überdruck ansammeln kann, von dieser Flüssigkeit in den Hochdruckraum hinein zu entlasten.

## Patentansprüche

1. Anordnung zur Abdichtung der Stelle, an der die axial bewegliche Stange (4) eines hydraulischen Gerätes dessen Gehäusewand (3) durchdringt, mit einem Dichtring (1) aus einem zähelastischen Kunststoff oder einem Elastomer-Werkstoff mit einer Außenfläche (21) und einer Innenfläche (10) und einem Spannring (2) aus einem Elastomer-Werkstoff, der weicher als der Werkstoff des Dichtrings (1) ist, welche Ringe gemeinsam in einer Nut (35) der Gehäusewand (3) derart angeordnet sind, daß die gemeinsame Berührungsfläche der beiden Ringe ein dem abzudichtenden Raum zugewandtes Ende (22) aufweist, und von denen der Spannring (2) mit einer durch Übermaß hervorgerufenen radialen Vorspannung zwischen die Umfangsfläche (31) der Nut (35) und die Außenflächen (21) des Dichtringes (1) dichtend eingespannt ist und der Dichtring (1) an seiner der Stange (4) zugewandten Innenfläche (10) zwei axial zueinander versetzte, ringförmige Dichtkanten (11, 12) aufweist, mit denen er die Stange (4) dichtend berührt, dadurch gekennzeichnet, daß der Dichtring (1) mindestens einen den sich zwischen den Dichtkanten (11, 12) befindenden Ringraum (13) mit seiner Außenfläche (21) verbindenden Kanal (14) aufweist und jede von der Einmündung eines Kanals (14) in die Außenfläche (21) gebildete Öffnung (15) von dem Spannring (2) bedeckt und zwischen dem hochdruckseitigen Ende (22) und der Mitte der gemeinsamen Berührungsfläche von Dichtring (1) und Spannring (2) angeordnet ist.

2. Anordnung nach Anspruch 1, dadurch gekennzeichnet, daß die Außenfläche (321) des Dichtringes (31a, 31b) mit einer Ringnut (318) versehen ist, in die die Kanäle (314) einmünden und die auf ihrer ganzen Länge von dem Spannring (32) bedeckt ist.

3. Anordnung nach Anspruch 1 oder 2, dadurch gekennzeichnet, daß der Dichtring aus zwei Teilringen (31a, 31b) besteht, von denen jeder eine Dichtkante (311 bzw. 312) aufweist, und daß der Kanal (314) von einer Nut gebildet wird, die in diejenige Stirnwand (316) eines der beiden Teilringe (31a) eingearbeitet ist, mit der dieser Teilring (31a) an dem anderen Teilring (31b) anliegt.

4. Anordnung nach einem der vorhergehenden Ansprüche, dadurch gekennzeichnet, daß der Dichtring (41) einen zwischen dem Spannring (42) und der Umfangsfläche (431) der Nut (435) angeordneten Abschnitt (417) aufweist, der zusammen mit dem die Dichtkanten (411, 412) aufweisenden Abschnitt eine den Spannring (42) aufnehmende, zur Hochdruckseite hin offene Nut (418) bildet.

## Claims

1. Arrangement for sealing off the location at which the axially movable rod (4) of a hydraulic device passes through the housing wall (3) of said device, having a sealing ring (1) of a tough resilient plastic or an elastomer material having an outer surface (21) and an inner surface (10) and a clamping ring (2) of an elastomer material which is softer than the material of the sealing ring (1), which rings are arranged together in a groove (35) of the housing wall (3) in such a way that the common area of contact of the two rings has an end (22) facing the space to be sealed off, and of which the clamping ring (2) is clamped sealingly between the peripheral surface (31) of the groove (35) and the outer surface (21) of the sealing ring (1) with a radial prestress brought about by overdimensioning, and the sealing ring (1) has on its inner surface (10) facing the rod two annular sealing edges (11, 12) offset axially relative to one another, with which it sealingly contacts the rod (4), characterized in that the sealing ring (1) has at least one passage (14) connecting the annular space (13) between the sealing edges (11, 12) to its outer surface (21) and each orifice (15) formed by the opening of a passage (14) into the outer surface (21) is covered by the clamping ring (2) and is arranged between the high-pressure end (22) and the centre of the common area of contact of sealing ring (1) and clamping ring (2).

2. Arrangement according to Claim 1, characterized in that the outer surface (321) of the sealing ring (31a, 31b) is provided with an annular groove (318) into which the passages (314) open and which is covered over its entire length by the clamping ring (32).

3. Arrangement according to Claim 1 or 2, characterized in that the sealing ring comprises two part rings (31a, 31b), each of which has a sealing edge (311 and 312 respectively) and in that the passage (314) is formed by a groove which is made in that end wall (316) of one of the two part rings (31a) by which this part ring (31a) rests against the other part ring (31b).

4. Arrangement according to one of the preceding claims, characterized in that the sealing ring (41) has a portion (417) arranged between the clamping ring (42) and the peripheral surface (431) of the groove (435) which, together with the portion having the sealing edges (411, 412), forms a groove (418) which accommodates the clamping ring (42) and is open to the high-pressure side.

## Revendications

1. Montage pour la réalisation de l'étanchéité de l'endroit où la tige (4) axialement mobile d'un instrument hydraulique pénètre à travers la paroi (3) de son carter, comportant une bague d'étanchéité (1) en matière plastique visco-élastique ou un élastomère présentant une face extérieure (21) et une face intérieure (10) et comportant une bague de serrage (2) réalisée en un matériau élastomère plus mou que celui de la bague d'étanchéité (1), ces deux bagues étant disposées ensemble dans une rainure (35) de la paroi de carter (3) de telle sorte que la surface de contact commune des deux bagues présente une extrémité (22) orientée vers l'espace à étancher, ladite bague de serrage (2) étant insérée sous précontrainte radiale provoquée par son surdimensionnement entre la face périphérique (31) de la rainure (35) et les faces extérieures (21) de la bague d'étanchéité (1) cette bague d'étanchéité (1) présentant sur sa surface intérieure (10) orientée vers la tige (4) deux arêtes d'étanchéité (11, 12) de forme annulaire et décalées axialement l'une par rapport à l'autre au moyen desquelles la bague 1 est en contact étanche avec la tige (4), caractérisé par le fait que la bague d'étanchéité (1) comporte au moins un canal (14) reliant l'espace annulaire (13) se trouvant entre les arêtes d'étanchéité (11, 12) à sa face extérieure (21) et que tout orifice (15) formé par l'embouchure du canal (14) dans la surface extérieure (21) est recouvert par la bague de serrage (2) et disposé entre l'extrémité (2) côté haute pression et le centre de la surface de contact commune entre la bague d'étanchéité (1) et la bague de serrage (2).

2. Montage selon la revendication 1, caractérisé par le fait que la surface extérieure (321) de la bague d'étanchéité (31a, 31b) est munie d'une rainure annulaire (318) dans laquelle débouchent les canaux (314) et qui est recouverte sur toute sa longueur la bague de serrage (32).

3. Montage selon la revendication 1 ou 2, caractérisé par le fait que la bague d'étanchéité est constituée de deux bagues partielles (31a, 31b) dont chacune présente une arête d'étanchéité (311 ou 312) et que le canal (314) est formé d'une rainure qui est usinée dans la paroi frontale (316) de l'une des deux bagues partielles (31a) par laquelle cette bague partielle (31a) s'applique sur l'autre bague partielle (31b).

4. Montage selon l'une des revendications précédentes, caractérisé par le fait que la bague d'étanchéité 41 présente une section (417) disposée entre la bague de serrage (42) et la surface périphérique (431) de la rainure (435), cette section (417) formant ensemble avec la section présentant les arêtes d'étanchéité (411, 412) une rainure (418) ouverte en direction du côté haute pression et recevant la bague de serrage (42).

EP 0 256 221 B1

$P_z = Pf$

$P$

5

2

31

3

35

15

21

22

1  11  14  13  12  4

10

Fig. 1

24

235

215

222

2 21

216

211  214  213  212  23

Fig. 2

Fig. 3

Fig. 4